# EUROPEAN PATENT APPLICATION

(11) **EP 4 543 037 A1**
(43) Date of publication of application: **23.04.2025**
(21) Application number: 23829592.7
(22) Date of filing: 07.04.2023
(51) Int. Cl.: H04Q 11/00

(54) **OTN DEVICE, SERVICE MANAGEMENT SYSTEM, AND AUTOMATIC CONNECTION METHOD OF OTN SUB-DEVICE**

(30) Priority: 27.06.2022 CN 202210733966
(71) Applicant: ZTE Corporation, Shenzhen, Guangdong 518057 (CN)
(72) Inventor: REN, Zhiliang, Shenzhen, Guangdong 518057 (CN); XIE, Da, Shenzhen, Guangdong 518057 (CN); CHEN, Weizhang, Shenzhen, Guangdong 518057 (CN); WU, Moufu, Shenzhen, Guangdong 518057 (CN)
(74) Representative: Savi, Massimiliano
(86) International application number: PCT/CN2023/087123
(87) International publication number: WO 2024/001402

(57) **Abstract**

The present application discloses an OTN device, a service management system, and an automatic connection method of an OTN sub-device. The OTN device comprises a first OTN master device (200) and at least one OTN sub-device (300); the first OTN master device (200) is used for being communicationally connected to a network management platform (400), and the first OTN master device (200) is provided with a first port for accessing a large granularity service; the OTN sub-device (300) is provided with a service port (310) for accessing a small granularity service, and the OTN sub-device (300) is connected to the first OTN master device (200) by means of optical fibers, wherein the OTN sub-device (300) maps the service port to a management interface of the first OTN master device (200), and the management interface is displayed by means of the network management platform (400) for a user to perform configuration management.

## Description

### CROSS-REFERENCE TO RELATED APPLICATION

This application is filed on the basis of Chinese patent application No. 202210733966.0 filed June 27, 2022, and claims priority to the Chinese patent application, the entire contents of which are incorporated herein by reference.

### TECHNICAL FIELD

The present disclosure relates to the technical field of communication, and more particularly, to an Optical Transport Network (OTN) device, a service management system, and an automatic connection method for an OTN sub-device.

### BACKGROUND

With the advent of the 5th-generation mobile communication technology (5G) era, high-bandwidth video technologies such as Virtual Reality (VR) and Augmented Reality (AR) have become widely utilized. These technologies demand bearer devices that meet requirements for high bandwidth, low latency, and other advanced performance metrics. In response to these demands, mainstream OTN devices are gradually developing toward large capacity and large bandwidth, to provide high bandwidth such as 100G, 200G, and 400G on the line side to bear large-granularity services.

For different application fields, both large-granularity service access and small-granularity service access need to be provided. For example, in rail transit, electric power, and other industry markets, there are a large number of production services with high performance and quality requirements. Such services often have a small access granularity, and need to be carried in an OTN format to ensure stable operation without interference. Because the bandwidth of board slots of an OTN device is usually high, and interfaces on boards are of a large size. In some technical schemes, if small-granularity ports need to be deployed on boards of OTN devices, the number of small-granularity ports that can be installed on a single board is limited due to the limitation of the physical size of the interface, failing to meet the requirements of access of a large number of small-granularity services, and leading to a waste of bandwidth of the board slots. If a special device is additionally used to implement the access of small-granularity services, the number of management network elements is increased due to stacking of devices used, increasing the workload of network configuration and the costs of operation and maintenance.

### SUMMARY

The present disclosure provides an OTN device, a service management system, and an automatic connection method for an OTN sub-device.

In accordance with a first aspect of the present disclosure, an embodiment provides an OTN device, including a first OTN master device and at least one OTN sub-device, where the first OTN master device is configured for communication connection with a network management platform, and includes a first port configured for accessing a large-granularity service; the at least one OTN sub-device each includes a service port configured for accessing a small-granularity service, and is connected to the first OTN master device by an optical fiber, where each of the at least one OTN sub-device maps the service port to a management interface of the first OTN master device, and the management interface is displayed through the network management platform for a user to perform configuration management.

In accordance with a second aspect of the present disclosure, an embodiment provides a service management system, including the OTN device in accordance with the embodiment of the first aspect of the present disclosure and a network management platform, where the network management platform is in communication connection with the first OTN master device, and the network management platform is configured for displaying a management interface of the first OTN master device for a user to perform configuration management on the OTN device.

In accordance with a third aspect of the present disclosure, an embodiment provides an automatic connection method for an OTN sub-device, applied to an OTN sub-device in the service management system in accordance with the embodiment of the second aspect of the present disclosure, the method including: receiving identification information from a first OTN master device, where the identification information indicates that the OTN sub-device and the first OTN master device are connected by a link; sending a first request packet to a network management platform through the first OTN master device, such that the network management platform sends a first response packet to the first OTN master device, where the first request packet is used for requesting to connect to the network management platform; receiving the first response packet forwarded by the first OTN master device; and connecting to the network management platform according to the first response packet.

In accordance with a fourth aspect of the present disclosure, an embodiment provides a computer-readable storage medium, storing computer-executable instructions which, when executed by a computer, cause the computer to implement the automatic connection method for an OTN sub-device in accordance with the embodiment of the third aspect of the present disclosure.

### BRIEF DESCRIPTION OF DRAWINGS

FIG. 1 is a schematic structural diagram of an OTN device according to an embodiment of the present disclosure;
FIG. 2 is a schematic structural diagram of a service management system according to an embodiment of the present disclosure;
FIG. 3 is a schematic diagram of an OTN sub-device mapping a service port to a first OTN master device according to an embodiment of the present disclosure;
FIG. 4 is a schematic diagram of virtualizing management information of an OTN sub-device to a management interface of a first OTN master device according to an embodiment of the present disclosure;
FIG. 5 is a schematic structural diagram of an OTN device according to another embodiment of the present disclosure;
FIG. 6 is a schematic diagram of virtualizing management information of an OTN sub-device to a management interface of a first OTN master device according to another embodiment of the present disclosure;
FIG. 7 is a schematic diagram of a hidden relationship between a connection port of an OTN sub-device and a connection port of a first OTN master device according to an embodiment of the present disclosure;
FIG. 8 is a schematic structural diagram of an OTN device according to another embodiment of the present disclosure;
FIG. 9 is a flowchart of an automatic connection method for an OTN sub-device according to an embodiment of the present disclosure;
FIG. 10 is a flowchart of an automatic connection method for an OTN sub-device according to another embodiment of the present disclosure;
FIG. 11 is a flowchart of an automatic connection method for an OTN sub-device according to yet another embodiment of the present disclosure;
FIG. 12 is a flowchart of an automatic connection method for an OTN sub-device according to yet another embodiment of the present disclosure; and
FIG. 13 is a flowchart of an automatic connection method for an OTN sub-device according to yet another embodiment of the present disclosure.

### DETAILED DESCRIPTION

This section will give a detailed description of specific embodiments of the present disclosure. Preferred embodiments of the present disclosure are shown in the accompanying drawings. The function of the accompanying drawings is to use drawings to supplement the description of the text part of the description, such that those having ordinary skills in the art can intuitively and vividly understand each technical feature and the overall technical scheme of the present disclosure, but the accompanying drawings are not intended to be construed as limiting the scope of protection of the present disclosure.

In the description of the present disclosure, the term "at least one" means one or more, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first" and "second" are merely used for distinguishing technical features, and are not intended to indicate or imply relative importance, or implicitly point out the number of the indicated technical features, or implicitly point out the order of the indicated technical features.

In the description of the present disclosure, unless otherwise explicitly defined, the terms such as "configure", "install/mount" and "connect" should be understood in a broad sense, and those having ordinary skills in the art can reasonably determine the specific meanings of the above terms in the present disclosure based on the specific contents of the technical scheme. In the present disclosure, although logical orders have been shown in the flowcharts, in some cases, the steps shown or described may be performed in an order different from the orders as shown in the flowcharts.

In rail transit, electric power, and other industry markets, there are massive small-granularity production services with high performance and quality requirements. In some technical schemes, because the bandwidth of board slots of a conventional OTN device is usually high, and interfaces on boards are of a large size, if small-granularity ports need to be deployed on boards of OTN devices, the number of small-granularity ports that can be installed on a single board is limited due to the limitation of the physical size of the interface, failing to meet the requirements of access of a large number of small-granularity services, and leading to a waste of bandwidth of the board slots. If a special device such as a Multi-Services Access Platform (MSAP) device or Customer Premise Equipment (CPE) OTN is additionally used to implement the access of small-granularity services, the number of management network elements is increased due to stacking of devices used, increasing the workload of network configuration and the costs of operation and maintenance.

Embodiments of the present disclosure provide an OTN device, a service management system, and an automatic connection method for an OTN sub-device, to realize comprehensive bearer of large-granularity and small-granularity services, simplify operation and maintenance, and reduce the workload of network element configuration.

The embodiments of the present disclosure will be further described in detail below in conjunction with the accompanying drawings.

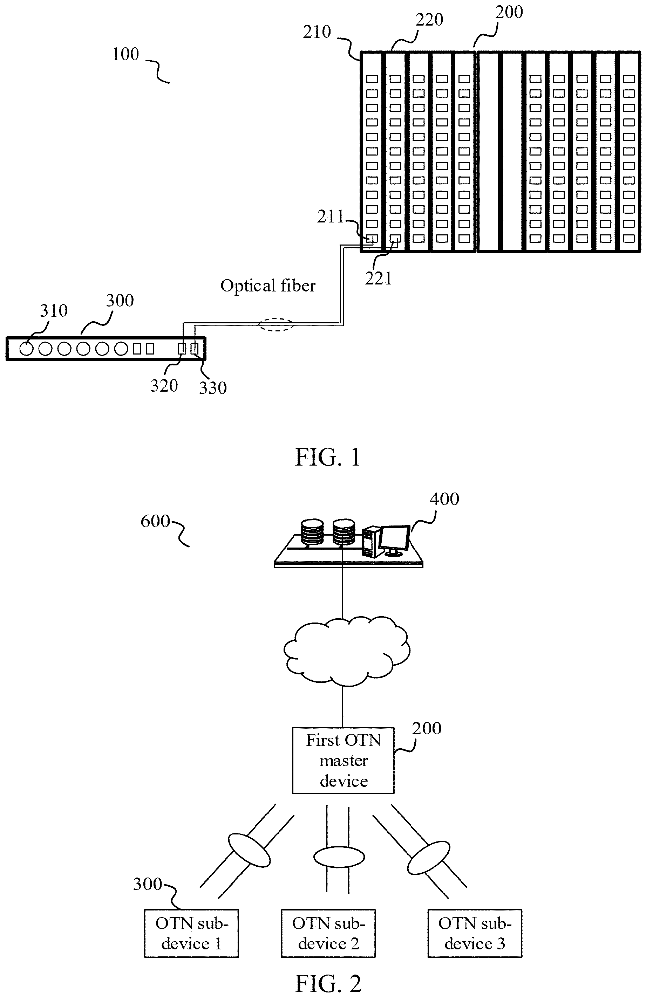

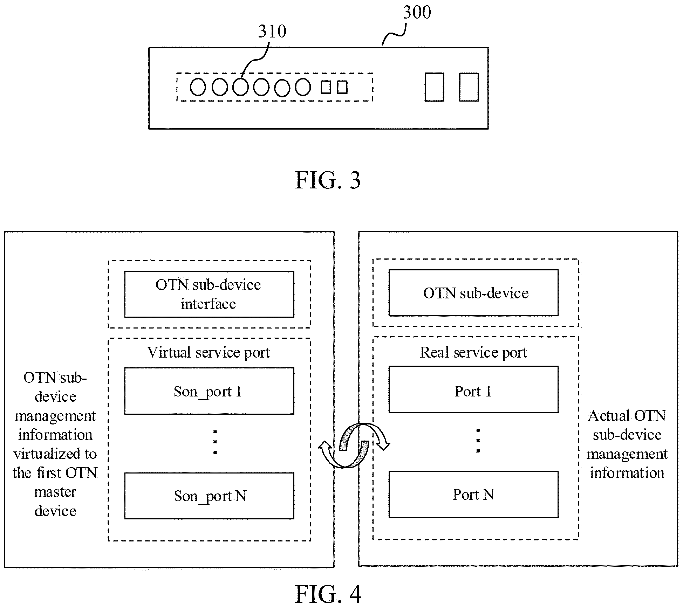

As shown in FIG. 1 to FIG. 4, in accordance with a first aspect of the present disclosure, an embodiment provides an OTN device 100, which includes a first OTN master device 200 and at least one OTN sub-device 300. The first OTN master device 200 is configured for communication connection with a network management platform 400. The first OTN master device 200 includes a first port configured for accessing a large-granularity service. The at least one OTN sub-device 300 each includes a service port 310 configured for accessing a small-granularity service. Each of the at least one OTN sub-device 300 is connected to the first OTN master device 200 by an optical fiber. Each of the at least one OTN sub-device 300 maps the service port 310 to a management interface of the first OTN master device 200. The management interface is displayed through the network management platform 400 for a user to perform configuration management.

In the OTN device 100 provided by this embodiment, the first OTN master device 200 includes the first port configured for accessing a large-granularity service, to meet the requirements of access of large-granularity services, and each of the at least one OTN sub-device 300 includes the service port 310 configured for accessing a small-granularity service, to meet the requirements of access of small-granularity services. The OTN device 100 can realize comprehensive bearer of large-granularity and small-granularity services, and has a wide range of application scenarios. In addition, each of the at least one OTN sub-device 300 is connected to the first OTN master device 200 by an optical fiber, and each of the at least one OTN sub-device 300 maps the service port 310 to the management interface of the first OTN master device 200, such that management information of the at least one OTN sub-device 300 can be centrally scheduled by the first OTN master device 200. Through communication connection between the first OTN master device 200 and the network management platform 400, the management interface of the first OTN master device 200 can be displayed on the network management platform 400, to facilitate the central management of the OTN master device 100 by the user, simplify operation and maintenance, and reduce the workload of network element configuration.

A plurality of service ports 310 may be provided on each of the at least one OTN sub-device 300, including an E1 (European 30-channel Pulse Code Modulation (PCM)) port, a Fast Ethernet (FE) port, a Gigabit Ethernet (GE) port, and a Synchronous Transport Module Level N (STM-N) port, or other small-granularity ports. A transmission rate of the E1 port is 2.048 Mbit/s.

It can be understood that the first OTN master device 200 may allow for insertion of service boards of a plurality of specifications, and the first OTN master device 200 includes the first port configured for accessing a large-granularity service, to support access of large-granularity services. Access granularities include 10 GE/100 GE, a STM 1/4/16/64, Optical Channel Transport Unit (OTU) 2/OTU4/OUTCn, etc. A bandwidth of a slot on the service board is 100G, 200G, or above.

As shown in FIG. 2 to FIG. 4, mapping the service port 310 to the management interface of the first OTN master device 200 may also be understood as virtualizing the OTN sub-device 300 into the first OTN master device 200. From the perspective of management, each OTN sub-device 300 serves as a functional module of the first OTN master device 200, and the management information of all the OTN sub-devices 300 is virtualized to the management interface of the first OTN master device 200. By connecting the first OTN master device 200 to the network management platform 400, the management interface of the first OTN master device 200 may be displayed on the network management platform 400. The management interface actually includes the management information of the OTN sub-devices 300, for the user to perform configuration management, such that service configuration, cross-connection, scheduling, resources, performance, alarming, and other processing can be centrally implemented in the first OTN master device 200. It can be understood that if a plurality of first OTN master devices 200 are connected to the network management platform 400, management interfaces of the corresponding first OTN master devices 200 are displayed on the network management platform 400.

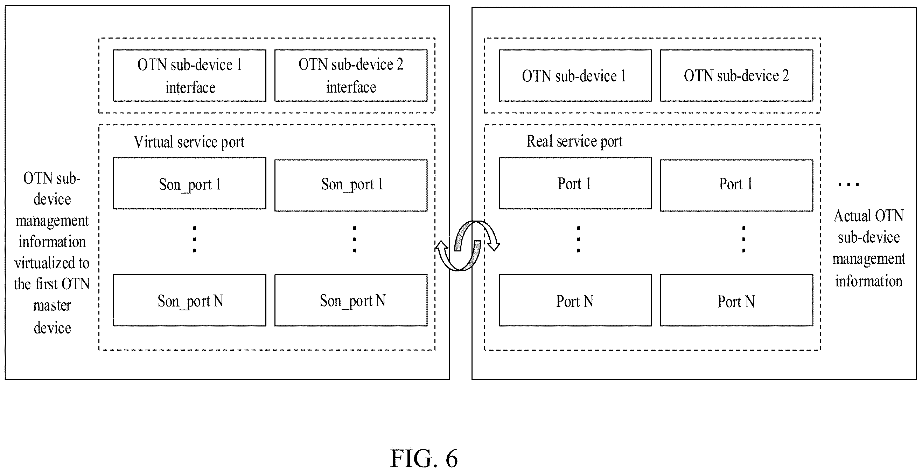

As shown in FIG. 2, FIG. 5, and FIG. 6, according to an embodiment of the present disclosure, the first OTN master device 200 may be connected to a plurality of OTN sub-devices 300, to meet the requirement of access of a large number of small-granularity services. The service ports 310 of all the OTN sub-devices 300 are mapped to the management interface of the first OTN master device 200. The management interface of the corresponding first OTN master device 200 is displayed on the network management platform 400, to realize central configuration management of the plurality of OTN sub-devices 300 and the first OTN master device 200. In this way, operation and maintenance can be simplified, the workload of network element configuration can be greatly reduced, and the costs can be reduced. The present disclosure can effectively solve the problem that the number of small-granularity ports that can be deployed on a conventional OTN device is limited due to the limitation of the physical size of the interface and cannot meet the requirements of access of a large number of small-granularity services, and can also solve the problems of too many management network elements, heavy configuration workload, and high operation and maintenance costs caused by the use of a special device to access small-granularity services. The OTN device 100 of the present disclosure is suitable for occasions requiring access of a large number of small-granularity services.

As shown in FIG. 1, in the OTN device 100, a line side of each of the at least one OTN sub-device 300 includes a first interface 320 configured for connecting to the first OTN master device 200, the first OTN master device 200 includes a first service board 210, the first service board 210 includes a second interface 211 corresponding to the first interface 320, and the first interface 320 is connected to the second interface 211 by an optical fiber.

In this embodiment, the first interface 320 is arranged on the line side of the OTN sub-device 300, the second interface 211 is arranged on the first service board 210 of the first OTN master device 200, and the first interface 320 is connected to the second interface 211 by an optical fiber, thus connecting the OTN sub-device 300 to the first OTN master device 200. As such, communication connection between the OTN sub-device 300 and the first OTN master device 200 can be achieved, and the OTN sub-device 300 and the first OTN master device 200 can exchange data through a communication channel.

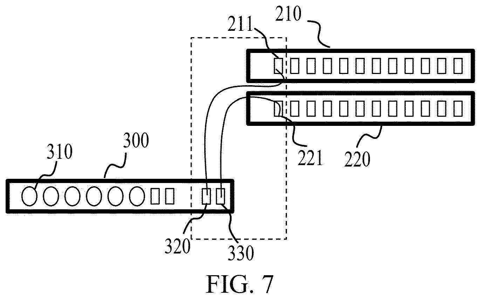

As shown in FIG. 1 and FIG. 7, according to an embodiment of the present disclosure, neither the first interface 320 nor the second interface 211 is displayed on the network management platform 400. By hiding the first interface 320 and the second interface 211, i.e., hiding the connection ports between the OTN sub-device 300 and the first OTN master device 200, network security can be enhanced, and the management interface of the first OTN master device 200 can be made more concise. On the management interface of the first OTN master device 200, the service port 310 of the OTN sub-device 300 may be mapped to a position corresponding to the second interface 211. The position at which the service port 310 is displayed is not limited in the present disclosure.

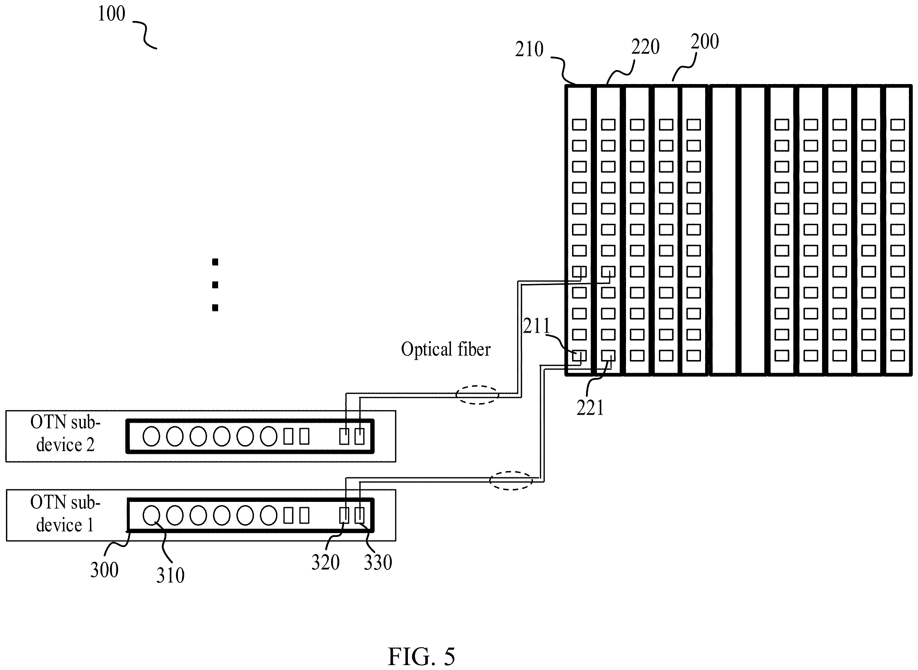

As shown in FIG. 5, according to an embodiment of the present disclosure, the first OTN master device 200 may support connection to a plurality of OTN sub-devices 300. The number of OTN sub-devices 300 connected may be increased by increasing the number of second interfaces 211 on the first service board 210.

As shown in FIG. 5, in the OTN device 100, each of the at least one OTN sub-device 300 further includes a third interface 330. The first OTN master device 200 further includes a second service board 220. The second service board 220 includes a fourth interface 221 corresponding to the third interface 330. The third interface 330 is connected to the fourth interface 221 by an optical fiber.

In this embodiment, the third interface 330 is arranged on the line side of the OTN sub-device 300, and is configured for connecting to a protection channel. The third interface 330 is connected to the fourth interface 221 on the second service board 220, and is connected to the fourth interface 221 by an optical fiber, thus providing a protection channel between the OTN sub-device 300 and the first OTN master device 200. The first interface 320 is configured for connecting to a working channel. The first interface 320 is connected to the second interface 211 by an optical fiber, thus providing a working channel between the OTN sub-device 300 and the first OTN master device 200. Through the arrangement of the first interface 320 and the third interface 330, the OTN sub-device 300 can be connected to different service boards of the first OTN master device 200, respectively, thereby realizing board-level protection and avoiding a service interruption of the OTN sub-device 300 caused by failure of one of the service boards of the first OTN master device 200. This is applicable to an application scenario requiring board-level protection.

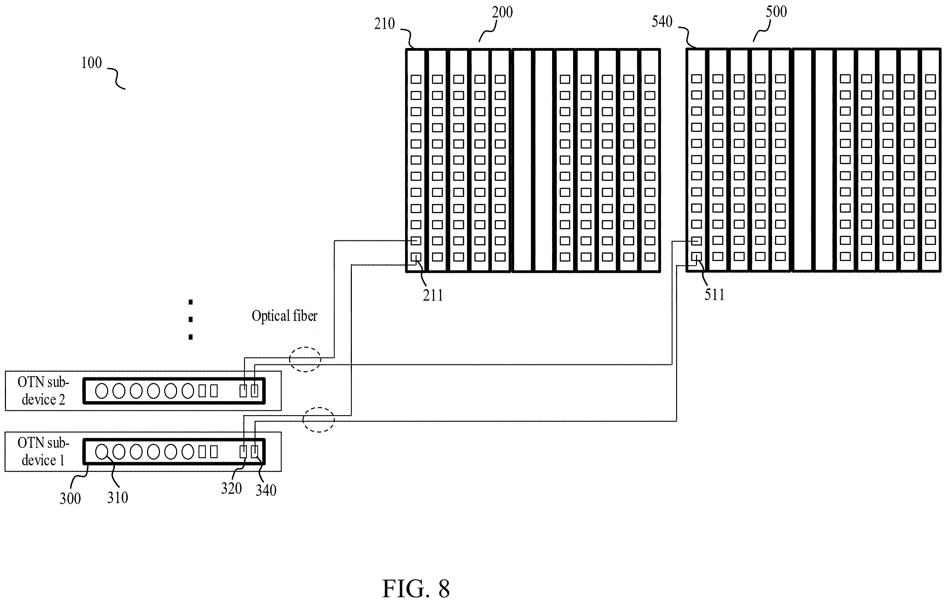

As shown in FIG. 8, the OTN device 100 further includes a second OTN master device 500. Each of the at least one OTN sub-device 300 further includes a fifth interface 340 configured for connecting to the second OTN master device 500. The second OTN master device 500 includes a third service board 510. The third service board 510 includes a sixth interface 511 corresponding to the fifth interface 340. The fifth interface 340 is connected to the sixth interface 511 by an optical fiber.

In this embodiment, the OTN device 100 further includes the second OTN master device 500. The second OTN master device 500 includes the third service board 510. The fifth interface 340 is arranged on the line side of the OTN sub-device 300 and is configured for connecting to a protection channel, and the fifth interface 340 is connected to the sixth interface 511 on the third service board 510. The fifth interface 340 is connected to the sixth interface 511 by an optical fiber, thus providing a protection channel between the OTN sub-device 300 and the second OTN master device 500. The first interface 320 is configured for connecting to a working channel. The first interface 320 is connected to the second interface 211 by an optical fiber, thus providing a working channel between the OTN sub-device 300 and the first OTN master device 200. Through the arrangement of the first interface 320 and the fifth interface 340, the OTN sub-device 300 can be respectively connected to the first OTN master device 200 and the second OTN master device 500, thereby realizing node-level protection and avoiding a service interruption of the OTN sub-device 300 caused by failure of the first OTN master device 200. This is applicable to an application scenario requiring node-level protection.

According to an embodiment of the present disclosure, in an application scenario having no requirement on protection, the structure of the OTN sub-device 300 may be as shown in FIG. 1. The OTN sub-device 300 may include two first interfaces 320 each connected to a corresponding second interface 211 on the first service board 210, which is not particularly limited in the present disclosure.

As shown in FIG. 2, in the OTN device 100, the first OTN master device 200 is a Dynamic Host Configuration Protocol (DHCP) relay, and the OTN sub-device 300 and the first OTN master device 200 exchange data through a General Communications Channel (GCC) based on High-level Data Link Control (HDLC).

In this embodiment, the OTN sub-device 300 exchanges data with the first OTN master device 200 through the GCC based on HDLC, such that management information can be exchanged between the OTN sub-device 300 and the first OTN master device 200, to realize normal service bearer. In addition, the first OTN master device 200 supports a DHCP relay function. After the OTN sub-device 300 is powered on and is interconnected with the first OTN master device 200 through a physical link, the OTN sub-device 300 can automatically load a file, such as system software, a configuration file, a patch file, a custom file, etc., thereby realizing a plug-and-play function of the OTN sub-device 300.

As shown in FIG. 1, in the OTN device 100, the first interface 320 includes at least one of a 10GE interface and an OTU interface, and the second interface 211 includes at least one of a 10GE interface and an OTU interface.

In this embodiment, the second interface 211 may be a 10GE interface, an OTU1 interface, or an OTU2 interface on the service board. To realize the connection between the OTN sub-device 300 and the first OTN master device 200, the first interface 320 corresponding to the second interface 211 is arranged on the OTN sub-device 300 as needed.

As shown in FIG. 1 to FIG. 4, in accordance with a second aspect of the present disclosure, an embodiment provides a service management system 600, including the OTN device 100 in accordance with the embodiment of the first aspect of the present disclosure and a network management platform 400. The network management platform 400 is in communication connection with the first OTN master device 200. The network management platform 400 is configured for displaying a management interface of the first OTN master device 200 for a user to perform configuration management on the OTN device 100.

In the service management system 600 provided by this embodiment, the network management platform 400 may perform configuration management on the OTN device 100. Each of the at least one OTN sub-device 300 includes the service port 310 configured for accessing a small-granularity service, to meet the requirements of access of small-granularity services. In addition, each of the at least one OTN sub-device 300 is connected to the first OTN master device 200 by an optical fiber, and each of the at least one OTN sub-device 300 maps the service port 310 to the management interface of the first OTN master device 200, such that management information of the at least one OTN sub-device 300 can be centrally scheduled by the first OTN master device 200. Through communication connection between the first OTN master device 200 and the network management platform 400, the management interface of the first OTN master device 200 can be displayed on the network management platform 400, to facilitate the central management of the OTN master device 100 by the user, simplify operation and maintenance, and reduce the workload of network element configuration.

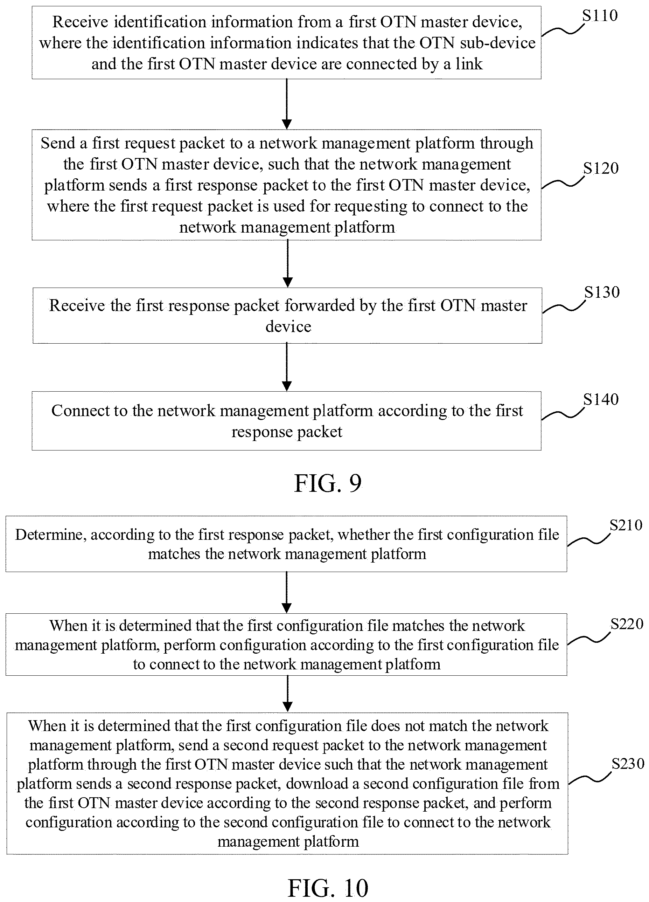

As shown in FIG. 2 and FIG. 9, in accordance with a third aspect of the present disclosure, an embodiment provides an automatic connection method for an OTN sub-device, applied to an OTN sub-device in the service management system 600 in accordance with the embodiment of the second aspect of the present disclosure. The automatic connection method for an OTN sub-device includes, but not limited to, the following steps S110 to S150.

At S110, identification information from a first OTN master device is received, where the identification information indicates that the OTN sub-device and the first OTN master device are connected by a link.

At S120, a first request packet is sent to a network management platform through the first OTN master device, such that the network management platform sends a first response packet to the first OTN master device, where the first request packet is used for requesting to connect to the network management platform.

At S130, the first response packet forwarded by the first OTN master device is received.

At S140, the network management platform is connected to according to the first response packet.

In the automatic connection method for an OTN sub-device according to this embodiment, when the OTN sub-device 300 receives identification information from the first OTN master device 200, indicating that the OTN sub-device 300 and the first OTN master device 200 are interconnected through a link, the OTN sub-device 300 sends a first request packet to the network management platform 400 through the first OTN master device 200, to request to connect to the network management platform 400. After receiving the first request packet, the network management platform 400 delivers a first response packet, which is forwarded by the first OTN master device 200 to the OTN sub-device 300. The OTN sub-device 300 connects to the network management platform 400 according to the first response packet. In this way, after the OTN sub-device 300 is powered on and is interconnected with the first OTN master device 200 through a physical link, the OTN sub-device 300 can automatically connect to the network management platform 400, for the network management platform 400 to manage the OTN sub-device 300, without requiring the user to configure the OTN sub-device 300.

According to an embodiment of the present disclosure, the automatic connection method for an OTN sub-device may be implemented based on DHCP. The first OTN master device 200 supports a DHCP relay function, and the network management platform 400 supports the DHCP server function, such that the OTN sub-device 300, once powered on and started, can automatically load a file, such as system software, a configuration file, a patch file, a custom file, etc., without requiring manual configuration.

According to an embodiment of the present disclosure, if the OTN sub-device 300 is connected to the first OTN master device 200 through a 10GE interface, the identification information is Link Layer Discovery Protocol (LLDP) information, and if the OTN sub-device 300 is connected to the first OTN master device 200 through an OTU2 interface, the identification information is Transmission Time Interval (TTI) information.

As shown in FIG. 10, in the automatic connection method for an OTN sub-device, the first request packet includes a first configuration file currently being run by the OTN sub-device; and S140 of connecting to the network management platform according to the first response packet includes, but not limited to, the following steps S210 to S230.

At S210, it is determined according to the first response packet whether the first configuration file matches the network management platform.

At S220, when it is determined that the first configuration file matches the network management platform, configuration is performed according to the first configuration file to connect to the network management platform.

At S230, when it is determined that the first configuration file does not match the network management platform, a second request packet is sent to the network management platform through the first OTN master device such that the network management platform sends a second response packet, a second configuration file is downloaded from the first OTN master device according to the second response packet, and configuration is performed according to the second configuration file to connect to the network management platform.

In this embodiment, the OTN sub-device 300 sends a first request packet to the network management platform 400 to request to connect to the network management platform 400, and at the same time, reports the first configuration file currently being run by the OTN sub-device to the network management platform 400 through the first request packet. The network management platform 400 determines whether the first configuration file matches an actual service requirement, and transmits a result to the OTN sub-device 300 through a second response packet. If the first configuration file matches the actual service requirement, the OTN sub-device 300 performs configuration according to the first configuration file to connect to the network management platform 400. If the first configuration file does not match the actual service requirement, the OTN sub-device 300 sends a second request packet to the network management platform 400, where the second request packet is used for requesting to update the first configuration file. After receiving the second request packet, the network management platform 400 delivers a second response packet. The OTN sub-device 300 receives the second response packet through the first OTN master device 200, and downloads a second configuration file from the first OTN master device 200 according to the second response packet, where the second configuration file is a configuration file that meets the current service requirement. The OTN sub-device 300 updates the first configuration file to the second configuration file, and performs configuration according to the second configuration file to connect to the network management platform 400. As such, the reliability of automatic configuration can be improved.

According to an embodiment of the present disclosure, the first configuration file is a default configuration file when the OTN sub-device 300 is powered on and started.

It can be understood that the OTN sub-device 300 and the first OTN master device 200 exchange information through a GCC based on HDLC, and after the configuration of the OTN sub-device 300 is completed, the OTN sub-device 300 can communicate with the network management platform 400 through the first OTN master device 200, and the network management platform 400 can manage the OTN sub-device 300. In this way, a plug-and-play function of the OTN sub-device 300 is realized, without requiring the user to configure the OTN sub-device 300.

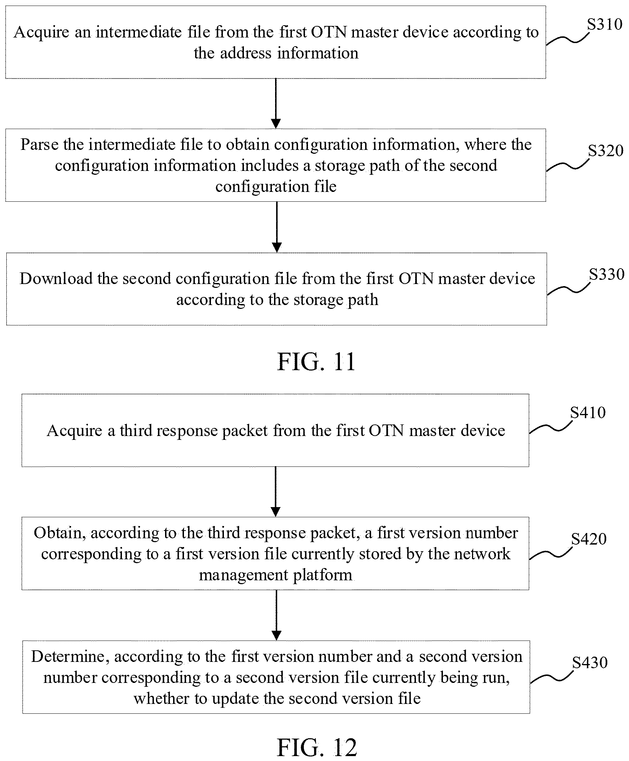

As shown in FIG. 11, in the automatic connection method for an OTN sub-device, the second response packet includes address information, and S230 of downloading a second configuration file from the first OTN master device according to the second response packet includes, but not limited to, the following steps S310 to S330.

At S310, an intermediate file is acquired from the first OTN master device according to the address information.

At S320, the intermediate file is parsed to obtain configuration information, where the configuration information includes a storage path of the second configuration file.

At S330, the second configuration file is downloaded from the first OTN master device according to the storage path.

The address information includes information such as an Internet Protocol (IP) address of the OTN sub-device 300, an address of a default gateway, an address of an intermediate server, etc. The intermediate server may be a server of a type such as a Trivial File Transfer Protocol (TFTP), File Transfer Protocol (FTP), Secret File Transfer Protocol (SFTP), or Hyper Text Transfer Protocol (HTTP). The configuration information includes a storage path of a first version file of the OTN sub-device 300.

In this embodiment, the OTN sub-device 300 and the first OTN master device 200 exchange information. The OTN sub-device 300 obtains address information from the second response packet, acquires an intermediate file from the first OTN master device 200 through an intermediate server, parses the intermediate file to obtain a storage path of the second configuration file of the OTN sub-device 300, and downloads the second configuration file from the first OTN master device 200 according to the storage path. In this way, the OTN sub-device 300 can obtain the second configuration file from the first OTN master device 200 according to the second response packet, such that the OTN sub-device 300 can normally connect to the network management platform 400, thereby realizing a plug-and-play function.

As shown in FIG. 12, the automatic connection method for an OTN sub-device further includes, but not limited to, the following steps S410 to S430.

At S410, a third response packet is acquired from the first OTN master device.

At S420, a first version number corresponding to a first version file currently stored by the network management platform is obtained according to the third response packet.

At S430, according to the first version number and a second version number corresponding to a second version file currently being run, it is determined whether to update the second version file.

In this embodiment, the OTN sub-device 300 exchanges information with the first OTN master device 200 through DHCP. The OTN sub-device 300 acquires a third response packet from the first OTN master device 200, obtains a first version number corresponding to a first version file currently stored by the network management platform 400 according to the third response packet, and determines, according to the first version number and a second version number corresponding to a second version file currently being run, whether to update the second version file. It can be understood that the first version file is a latest version file of the network management platform 400, and the third response packet carries latest version information of the network management platform 400. The first version number corresponding to the first version file may be obtained by parsing an intermediate file corresponding to the third response packet, such that the first version file can be updated with a latest version file in a timely manner, thereby ensuring the reliability of automatic configuration.

According to an embodiment of the present disclosure, the second version file may be a default version file when the OTN sub-device 300 is powered on and started.

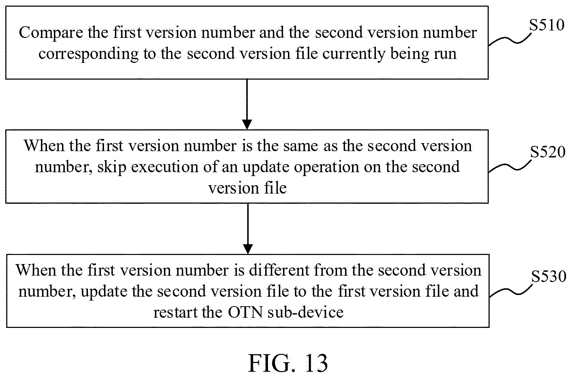

As shown in FIG. 13, in the automatic connection method for an OTN sub-device, S430 of determining, according to the first version number and a second version number corresponding to a second version file currently being run, whether to update the second version file includes, but not limited to, the following steps S510 to S530.

At S510, the first version number and the second version number corresponding to the second version file currently being run are compared.

At S520, when the first version number is the same as the second version number, execution of an update operation on the second version file is skipped.

At S530, when the first version number is different from the second version number, the second version file is updated to the first version file and the OTN sub-device is restarted.

In this embodiment, the first version number is compared with the second version number. If the first version number and the second version number are the same, indicating that the second version file currently being run is already the latest version file, the OTN sub-device 300 does not perform an update operation on the second version file, and normally operates according to the second version file. If the first version number is different from the second version number, the OTN sub-device 300 updates the second version file to the first version file and restarts, thereby ensuring the reliability of operation of the OTN sub-device 300.

Updating the second version file to the first version file includes: obtaining a storage path of the first version file according to the third response packet, downloading the first version file from the first OTN master device 200, and setting the first version file as a file for next startup.

In accordance with a fourth aspect of the present disclosure, an embodiment provides a computer-readable storage medium, storing computer-executable instructions which, when executed by a computer, cause the computer to implement the automatic connection method for an OTN sub-device in accordance with the embodiment of the third aspect of the present disclosure.

In the computer-readable storage medium provided by this embodiment, when the OTN sub-device 300 receives identification information from the first OTN master device 200, indicating that the OTN sub-device 300 and the first OTN master device 200 are interconnected through a link, the OTN sub-device 300 sends a first request packet to the network management platform 400 through the first OTN master device 200, to request to connect to the network management platform 400. After receiving the first request packet, the network management platform 400 delivers a first response packet, which is forwarded by the first OTN master device 200 to the OTN sub-device 300. The OTN sub-device 300 connects to the network management platform 400 according to the first response packet. In this way, after the OTN sub-device 300 is powered on and is interconnected with the first OTN master device 200 through a physical link, the OTN sub-device 300 can automatically connect to the network management platform 400, for the network management platform 400 to manage the OTN sub-device 300, without requiring the user to configure the OTN sub-device 300.

Embodiments of the present disclosure include: an OTN device, a service management system, and an automatic connection method for an OTN sub-device. The OTN device includes a first OTN master device and at least one OTN sub-device. The first OTN master device is configured for communication connection with a network management platform. The first OTN master device includes a first port configured for accessing a large-granularity service. The at least one OTN sub-device each includes a service port configured for accessing a small-granularity service, and is connected to the first OTN master device by an optical fiber. Each of the at least one OTN sub-device maps the service port to a management interface of the first OTN master device, and the management interface is displayed through the network management platform for a user to perform configuration management. In the technical scheme provided by this embodiment of the present disclosure, the first OTN master device includes the first port configured for accessing a large-granularity service, to meet the requirements of access of large-granularity services, and each of the at least one OTN sub-device includes the service port configured for accessing a small-granularity service, to meet the requirements of access of small-granularity services. The OTN device can realize comprehensive bearer of large-granularity and small-granularity services, and has a wide range of application scenarios. In addition, each of the at least one OTN sub-device is connected to the first OTN master device by an optical fiber, and each of the at least one OTN sub-device maps the service port to the management interface of the first OTN master device, such that management information of the at least one OTN sub-device can be centrally scheduled by the first OTN master device. Through communication connection between the first OTN master device and the network management platform, the management interface of the first OTN master device can be displayed on the network management platform, to facilitate the central management of the OTN master device by the user, simplify operation and maintenance, and reduce the workload of network element configuration.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium or non-transitory medium and a communication medium or transitory medium. As is known to those having ordinary skills in the art, the term "computer storage medium" includes volatile and nonvolatile, removable and non-removable media implemented in any method or technology for storage of information such as computer readable instructions, data structures, program modules, or other data. The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. An Optical Transport Network (OTN) device, comprising:
a first OTN master device, configured for communication connection with a network management platform, and comprising a first port configured for accessing a large-granularity service; and
at least one OTN sub-device, each comprising a service port configured for accessing a small-granularity service, and connected to the first OTN master device by an optical fiber,
wherein each of the at least one OTN sub-device maps the service port to a management interface of the first OTN master device, and the management interface is displayed through the network management platform for a user to perform configuration management.

2. The OTN device of claim 1, wherein a line side of each of the at least one OTN sub-device comprises a first interface configured for connecting to the first OTN master device, the first OTN master device comprises a first service board, the first service board comprises a second interface corresponding to the first interface, and the first interface is connected to the second interface by an optical fiber.

3. The OTN device of claim 2, wherein each of the at least one OTN sub-device further comprises a third interface, the first OTN master device further comprises a second service board, the second service board comprises a fourth interface corresponding to the third interface, and the third interface is connected to the fourth interface by an optical fiber.

4. The OTN device of claim 2, further comprising a second OTN master device, wherein each of the at least one OTN sub-device comprises a fifth interface configured for connecting to the second OTN master device, the second OTN master device comprises a third service board, the third service board comprises a sixth interface corresponding to the fifth interface, the fifth interface is connected to the sixth interface by an optical fiber.

5. The OTN device of any of claims 1 to 4, wherein the first OTN master device is a Dynamic Host Configuration Protocol (DHCP) relay, and the at least one OTN sub-device and the first OTN master device exchange data through a General Communications Channel (GCC) based on High-Level Data Link Control (HDLC).

6. The OTN device of claim 2, wherein the first interface comprises at least one of a 10 Gigabit Ethernet (10GE) interface and an Optical channel Transport Unit (OTU) interface, and the second interface comprises at least one of a 10GE interface and an OTU interface.

7. A service management system, comprising an OTN device of any of claims 1 to 6 and a network management platform, wherein the network management platform is in communication connection with the first OTN master device, and the network management platform is configured for displaying a management interface of the first OTN master device for a user to perform configuration management on the OTN device.

8. An automatic connection method for an Optical Transport Network (OTN) sub-device, applied to an OTN sub-device in the service management system of claim 7, the method comprising:
receiving identification information from a first OTN master device, wherein the identification information indicates that the OTN sub-device and the first OTN master device are connected by a link;
sending a first request packet to a network management platform through the first OTN master device, such that the network management platform sends a first response packet to the first OTN master device, wherein the first request packet is used for requesting to connect to the network management platform;
receiving the first response packet forwarded by the first OTN master device; and
connecting to the network management platform according to the first response packet.

9. The automatic connection method for an OTN sub-device of claim 8, wherein the first request packet comprises a first configuration file currently being run by the OTN sub-device; and connecting to the network management platform according to the first response packet comprises:
determining according to the first response packet whether the first configuration file matches the network management platform;
in response to determining that the first configuration file matches the network management platform, performing configuration according to the first configuration file to connect to the network management platform; and
in response to determining that the first configuration file does not match the network management platform, sending a second request packet to the network management platform through the first OTN master device such that the network management platform sends a second response packet, downloading a second configuration file from the first OTN master device according to the second response packet, and performing configuration according to the second configuration file to connect to the network management platform.

10. The automatic connection method for an OTN sub-device of claim 9, wherein the second response packet comprises address information, and downloading a second configuration file from the first OTN master device according to the second response packet comprises:
acquiring an intermediate file from the first OTN master device according to the address information;
parsing the intermediate file to obtain configuration information, wherein the configuration information comprises a storage path of the second configuration file; and
downloading the second configuration file from the first OTN master device according to the storage path.

11. The automatic connection method for an OTN sub-device of claim 8, further comprising:
acquiring a third response packet from the first OTN master device;
obtaining, according to the third response packet, a first version number corresponding to a first version file currently stored by the network management platform; and
determining, according to the first version number and a second version number corresponding to a second version file currently being run, whether to update the second version file.

12. The automatic connection method for an OTN sub-device of claim 11, wherein determining, according to the first version number and a second version number corresponding to a second version file currently being run, whether to update the second version file comprises:
comparing the first version number and the second version number corresponding to the second version file currently being run;
in response to the first version number being the same as the second version number, skipping execution of an update operation on the second version file; and
in response to the first version number being different from the second version number, updating the second version file to the first version file and restarting the OTN sub-device.

13. A computer-readable storage medium, storing computer-executable instructions which, when executed by a computer, cause the computer to perform the automatic connection method for an OTN sub-device of any of claims 8 to 12.
